# EUROPEAN PATENT APPLICATION

(11) **EP 4 711 881 A1**
(43) Date of publication of application: **18.03.2026**
(21) Application number: 25195024.2
(22) Date of filing: 11.08.2025
(51) Int. Cl.: G05D 1/654, G05D 1/617, G05D 105/80, G05D 107/20, G05D 109/25, G08G 5/00, A01B 79/00, B64U 10/00

(54) **AGRICULTURAL DRONE SYSTEM**

(30) Priority: 12.09.2024 GB 202413460
(71) Applicant: AGCO International GmbH, 8212 Neuhausen am Rheinfall (CH)
(72) Inventor: Stehling, Christoph, 87637 Seeg (DE)
(74) Representative: AGCO Intellectual Property Department

(57) **Abstract**

An agricultural system comprises an agricultural machine (102) and a drone (104). A drone landing platform (106) is mounted to the agricultural machine (102). A dynamically controllable geofence (114) is generated which defines prohibited drone positions. The geofence shape is adapted for landing of the drone (104) to provide permitted drone positions during landing on the drone landing platform (106).

## Description

### FIELD

Embodiments of the present disclosure relate to systems and methods for controlling agricultural drones.

### BACKGROUND

Drones have become increasingly valuable tools in agriculture, offering a range of applications that help farmers improve efficiency, reduce costs, and increase crop yields.

For example, drones are used for crop monitoring and scouting, by equipping drones with cameras and sensors, allowing farmers to monitor plant health, growth, and development. This helps in identifying issues like pest infestations, diseases, and water stress early, enabling timely intervention.

Drones can collect data that helps in the precise application of fertilizers, pesticides, and water. Drones can also be equipped with sensors to measure soil conditions, such as moisture levels and nutrient content. This information may be used for planning planting schedules, irrigation systems, and crop management strategies.

Some advanced drones can also perform planting and seeding tasks, dropping seeds or pods into the soil with high accuracy. Drones equipped with spraying systems can apply pesticides, herbicides, and fertilizers over crops.

Drones can also be used to create 3D maps of fields, providing detailed information about the terrain, which is useful for planning drainage systems, leveling fields, and optimizing machinery use. In addition to crop management, drones can also be used to monitor livestock. They can help in locating animals, monitoring their health, and managing pastureland.

Typically, pictures and sensor data obtained by a drone are uploaded to a cloud and subsequently analyzed.

It would be desirable to be able to use a drone automatically or autonomously during field work in real-time. For example, a drone may be used to perform its intended function while the farmer is using an agricultural machine (e.g., tractor). The analyzed data may then be transferred from the drone to the agricultural machine in real-time. With the information collected from the drone, the operator (or the machine itself) can then make real-time decisions about the settings of the agricultural machine (such as adjusting planting density or the application rate of herbicides and/or pesticides), determine the condition of the machine or predict the yield.

There are two ways to fly drones in Europe. One is to fly by sight, the other is to fly outside the field of view of the operator. Flying outside the field of view is extremely complex and involves long approval procedures. It is therefore preferred to comply with the regulations for flying a drone in sight. This means, among other things, that the drone must be in the field of vision of the operator at all times, including during take off and landing.

It is known to launch and control a drone from the tractor itself, and to control the drone (or allow automatic control of the drone) while the farmer continues his other tasks. However, it is challenging to ensure the drone remains in sight of the operator of the agricultural machine (e.g., tractor) to enable flying by sight, it also requires the take-off and landing of the drone to be controlled in a safe manner.

### BRIEF SUMMARY

The concept of this disclosure is defined by the claims. According to examples in accordance with this disclosure, there is provided an agricultural system, comprising:
an agricultural machine;
a drone landing platform mounted to the agricultural machine;
a controller configured to generate a dynamically controllable geofence which defines prohibited drone positions, wherein the controller is configured to adapt the geofence shape for landing of the drone to provide a permitted drone path during landing on the drone landing platform.

The geofence has a variable shape and position and defines zones into which the drone is not allowed to enter. The geofence is in particular adjusted during landing, for example when a landing approach is started, such that the drone lands safely on the drone landing platform.

The drone may be an unmanned aerial vehicle (UAV).

The controller is for example configured to define a first geofence shape during drone flight which includes a prohibited volume around the agricultural machine and a second geofence shape during drone landing which excludes the drone landing platform. Hence, the controller is configured to adjust the shape and size of the geofence during the landing (or take-off) of the drone, e. g. by switching between the first and second geofence shape.

During drone flight, the agricultural machine (including the landing platform) is for example within the geofence. This is used to ensure the flight is within the regulations, for example for flying by sight. The geofence also avoids collision between the drone and the agricultural machine. The geofence is changed in shape during landing, such that the drone landing platform as well as a path leading to the drone landing platform becomes permitted for the drone landing function. Thus, the path becomes excluded from the geofence of prohibited positions.

The controller may be further configured to adapt the geofence shape for take-off of the drone to provide permitted drone positions during take-off from the drone landing platform. Thus, the geofence is adapted for both take-off and landing. The drone landing platform thus become both a landing and take-off pad.

The agricultural machine for example comprises an operator cabin, and the drone landing platform is positioned in the driver's field of view out of the cabin. The drone landing platform may be positioned on the engine hood or at the front or rear hitch. In this way, the drone landing and take-off are visible by the operator of the agricultural machine e. g. when facing their normal direction for operating the agricultural machine. The controller is thereby configured to generate permitted drone positions within a field of view from the operator cabin during landing.

The geofence is thereby adjusted during the landing approach such that the drone does not move outside the field of view of a user located in the cabin. This enables the drone to land safely on the drone landing platform while being visually monitored by the operator. It also enables a manual landing option (visual flight mode) to be chosen.

The same concept may be applied to the drone take-off as well.

The controller may be configured to generate the geofence such that all non-prohibited drone positions are within a field of view of an operator position of the agricultural machine. In this way, visibility of the drone from the operator position (i.e., in the operator cab) is ensured during flight.

The agricultural system may further comprise a database storing data relating to the field of view of a plurality of types of agricultural machine, wherein the controller is configured to generate the dynamically controllable geofence for a selected one of said plurality of types of agricultural machine. In this way, the system can self-configure to a particular type of machine. It may receive the type of machine as a manual input or by automatic detection.

The controller is for example configured to adapt the position and/or shape of the geofence in dependence on one or more of:
the position of the agricultural machine;
the speed of the agricultural machine;
the field of view from the operator cabin;
environmental conditions.

Thus, various factors may be taking into account when determining the geofence shape, and hence the permitted landing path and/or take-off path.

The controller is for example configured to generate drone flight control signals for controlling the drone. Thus, the drone is controlled automatically by the same system that generates the geofence. The controller is for example also configured to generate agricultural machine control signals for controlling the agricultural machine.

Thus, the drone and the agricultural machine may both be controlled, for example during take-off and landing, to provide safest conditions during take-off and landing.

The controller is for example configured to control a speed of the agricultural machine during landing and/or take-off of the drone. This provides safe landing or take-off conditions.

The agricultural system for example comprises a satellite navigation system for detecting the position of the agricultural machine, and the controller is configured to generate the geofence using the detected position of the agricultural machine. Thus, the geofence is defined relative to the position (including altitude) of the agricultural machine, and hence relative to the position of the drone landing platform.

The agricultural system may further comprise the drone, and the drone comprises a position sensor. Thus, the overall system includes the drone and the agricultural machine. The drone position and the agricultural machine position are tracked, so that the drone position relative to the geofence (which itself is defined relative to the position of the agricultural machine) can be determined.

The drone for example comprises one or both of:
a camera; and
a wind speed and direction sensor.

The camera for example enables detection of dusty areas, and the permitted landing path and/or take-off path may be adapted to maintain visibility of the drone. Similarly, the permitted landing path may be adapted in dependence on the wind direction and speed.

This disclosure also provides a method of controlling a drone of an agricultural system, wherein the drone is for taking off from, and landing to, a drone landing platform of an agricultural machine of the agricultural system, the method comprising:
generating a dynamically controllable geofence which defines prohibited drone positions, wherein the method comprises adapting the geofence shape for landing of the drone to provide a permitted drone path during landing on the drone landing platform.

The geofence provides protection to the drone during normal flight by defining prohibited zones. These zones for example include the vicinity of the agricultural machine. However, during landing (and optionally also during take-off) the geofence is adapted to provide a safe landing path (and optionally also safe take-off path).

The method for example comprises defining a first geofence shape during drone flight which includes a prohibited volume around the agricultural machine and a second geofence shape during drone landing which excludes the drone landing platform and said permitted drone path.

The method may comprise generating the geofence such that all non-prohibited drone positions are within a field of view of an operator position of the agricultural machine.

This disclosure also provides a computer program comprising computer program code which is adapted to perform the method defined above when the program is run on the controller of the agricultural system.

According to examples in accordance with another aspect of this disclosure, there is provided an agricultural system, comprising:
an agricultural machine;
a drone landing platform mounted to the agricultural machine;
a controller configured to generate a dynamically controllable geofence which defines prohibited drone positions, wherein the controller is configured to generate the geofence such that all non-prohibited drone positions are within a field of view of an operator position of the agricultural machine.

According to examples in accordance with another aspect of this disclosure, there is provided a method of controlling a drone of an agricultural system, wherein the drone is for taking off from, and landing to, a drone landing platform of an agricultural machine of the agricultural system, the method comprising:
generating a dynamically controllable geofence which defines prohibited drone positions, wherein the method comprises generating the geofence such that all non-prohibited drone positions are within a field of view of an operator position of the agricultural machine.

### BRIEF DESCRIPTION OF THE DRAWINGS

One or more embodiments of this disclosure will now be described, by way of example only, with reference to the accompanying drawings, in which:
Fig. 1 shows an agricultural machine and a mobile drone;
Fig. 2 shows an example in which a lower zone of the geofence is switched to inactive when landing has been triggered, thus allowing the landing;
Fig. 3 shows an alternative example in which the size of the geofence is reduced to opens a tunnel which leads the drone to the landing platform;
Fig. 4 shows a large dust cloud which is enclosed by the geofence; and
Fig. 5 shows a control unit.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to an agricultural system, comprising an agricultural machine and a drone. A drone landing platform is mounted to the agricultural machine. A dynamically controllable geofence is generated by a control unit which defines prohibited drone positions. The geofence shape is adapted for landing of the drone to provide permitted drone positions during landing on the drone landing platform. The geofence shape is optionally also adapted to ensure the drone remains within view of an operator position of the agricultural machine.

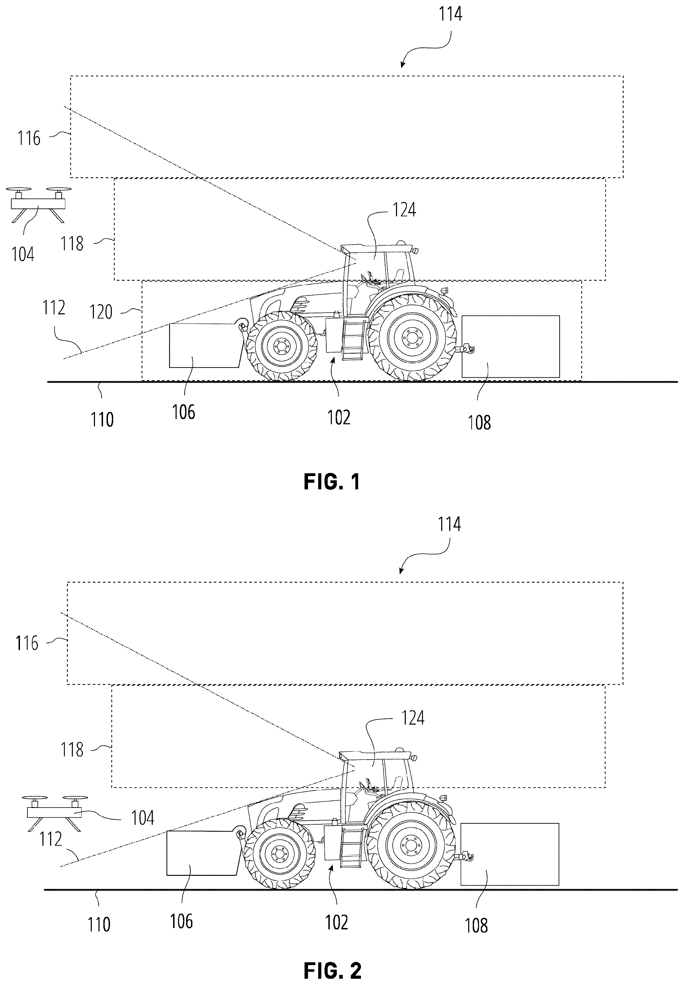

Fig. 1 shows an agricultural machine (e.g., tractor) 102 and a mobile drone 104. By "drone" in this application is meant any unmanned aerial vehicle - UAV. The agricultural machine drives on the ground 110 and for example tows an attachment 108.

The agricultural machine 102 has a drone landing platform 106 attached to the front of the agricultural machine for the drone 104. The aim is to enable the drone 104 to be operated using fly by sight, in particular during flight and during the landing approach and take off of the drone 104 to/from the landing platform 106. In order to ensure that the drone 104 may be operated using fly by sight, it is necessary to ensure that the drone 104 remains visible at all times during its flight. In particular, the drone 104 needs to be visible to the machine operator from the cabin 124 of the agricultural machine 102 during flight, and take off and landing.

The location of the drone 104 may be limited during drone flight to areas that are visible from the cabin 124. Furthermore, safe landing, and optionally also take-off, may be achieved. These objectives are achieved by setting up one or more mobile (i.e., dynamically adjustable) geofences 114 depending on the position of agricultural machine 102. The geofences ensure a safe flight adhering to fly by sight requirements and also avoids a collision between the drone 104 and the agricultural machine 102.

The geofence 114 is variable in shape and height under the control of the control unit 502 (discussed below). In the example shown in Fig. 1, the geofence 114 has several zones, e.g. a lower zone 120, a middle zone 118 and an upper zone 116. The height and diameter of each zone can be set independently of each other using the control unit 502. By way of example, the height of each zone may be two meters and the diameter of the lower zone 120 may be five meters. In addition to the diameter, the shape of the geofence can also be flexibly adjusted. The zones 116, 118, 120, can thus be individually activated or deactivated and/or changed in size or shape. Optionally, additional zones may be generated by the control unit 502. The drone 104 for example has a maximum flight height below the top of the upper zone 116. Thus, the entire space above the height of the upper zone 116 may be considered to comprise a further zone of the geofence.

A geofence 114 is a virtually-defined area that a machine is not allowed to enter or leave. For example, it is well known to create a stationary geofence about a point of interest, and if a tracked vehicle crosses the stationary geofence, an alert will issue.

It is also known to create a dynamically controllable geofence. For example, US 2012/0259537 discloses the generation of a moving geofence, about the location of a machine to be tracked. The moving geofence may take the form of a virtual fence that can then be used to trigger events, alarms, messages, etc., based upon the location of the moving geofence with respect to a point of interest.

This disclosure provides a geofence 114 which is variable in position and shape and into which the drone 104 is not allowed to enter. The geofence 114 may have static zones, for example zones where it is not permitted to fly a drone, and also dynamic zones. The dynamic zones define the prohibited areas as locations which have a positional relationship to the agricultural machine 102. Thus, some geofence zones move with the agricultural machine 102 and others do not.

As shown in Fig. 1, during flight of the drone 104, the geofence 114 provides a volume around the agricultural machine, hence preventing collision between the drone and the agricultural machine 102. In addition, the geofence 114 defines a zone above and/or around the cabin 124, where the driver cannot see the drone 104. Thus, by prohibiting drone flight in the geofence 114 (noting that the drone cannot fly above the top zone 116 shown in Fig. 1), the drone 104 will remain visible from the cabin 124 (although not necessarily in the forward field of view 112 of the operator). More generally, the agricultural machine 102 has an operator position at which the operator is located during use of the machine, most typically a seat within a driver's cabin 124. The drone 104 will remain visible from the cabin 124 when there is a field of view between the operator position (typically the intended position of the operator's head) and the drone 104. Thus, "the operator position" may be understood as the position where the driver's head is located when operating the agricultural machine 102 in the normally intended manner.

To maintain the prohibited volume where the drone 104 would not be visible from the cabin 124, the absolute position of the prohibited zone moves with the agricultural machine 102, so that the absolute configuration of the geofence 114 is dynamically adjusted. The exclusion volume remains in a desired position relative to the agricultural machine 102.

Furthermore, the geofence 114 is adjusted, in particular during a landing approach, such that the drone 104 has a permitted path to the landing platform 106. Furthermore, in one possible implementation, this landing path (and hence the drone flight during landing) is within the forward-facing field of view 112 of the operator located in the cabin 124, thereby enabling the drone 104 to land safely on the platform 106 connected to the agricultural machine 102.

The challenge with an automatic or monitored autonomous drone flight is to ensure the safety of the drone flight. As explained above, when the drone 104 is operated in visual flight mode, the user (pilot) should be able to see the drone 104 at all times. The pilot typically sitting in the cabin 124 must be able to take control of the drone 104 at any time.

The geofence 114 may furthermore be adapted depending on the speed of the agricultural machine 102, visibility of the drone 104, which is limited by the design-related field of view 112 of the agricultural machine 102, and other environmental influences such as wind or dust 122, which the agricultural machine 102 stirs up during field work.

For example, the size of the geofence 114 may be increased (hence reducing the non-prohibited volume) in response to an increase in speed of the agricultural machine 102 to improve the visibility of the drone 104.

For the design-related field of view of the agricultural machine 102, the field of view 112 out of a cabin 124 of a specific type of an agricultural machine is restricted by the dimensions of the machine and/or the blind spots (dead angles) of the specific machine. Thus, the field of view 112 will vary depending on the type of the machine to which the landing platform 106 has been attached.

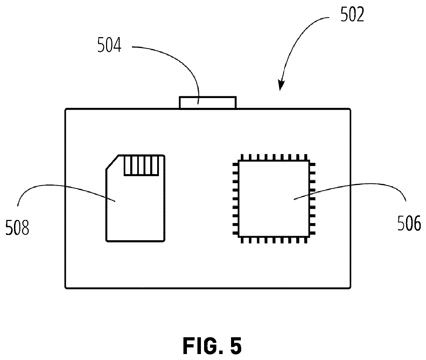

Data relating to the field of view 112, such as dimensions defining the field of view 112, dimensions defining the structures around the operator position, information about blind spots, etc., may be stored as database information for different types of agricultural machine. This database may be stored in a memory 508 of the control unit 502 as parameter sets (see Fig. 5).

After the landing platform 106 has been attached to an agricultural machine 102, the operator may select the correct type of the machine (e. g., operating a terminal in the cabin) so that the controller 506 of the control unit 502 can automatically adjust the geofence according to the field of view out of the specific machine. Alternatively, the controller 506 may automatically detect the type of the machine after the landing platform 106 has been attached and adjust the geofence 114 without any manual input.

The basis for the geofence 114 is the GPS data of the agricultural machine 102. This can be optimized by correction systems such as real-time kinematic (RTK) correction. Equally important are the position and height of the agricultural machine 102. The center of the vehicle is assumed to be the center of the geofence 114.

To define the permitted landing or take-off path, the zones of the geofence 114 can be partially or completely deactivated for take-off and landing or customized for each zone. For example, certain zones 116, 118 and/or 120 of the geofence 114 can be released for the approach to the landing platform 106, i.e., they can be deactivated and/or their size can be changed.

The landing platform 106 can be attached to the front or rear lifting gear of an agricultural machine 102, but also to any other location. However, as shown in Fig. 1, the landing platform 106 is exemplarily attached to the front of the agricultural machine 102.

This offers several advantages. The drone 104 can be controlled to be in the field of view 112 of the operator in the cabin 124 and the flight or landing can be followed at any time. The user can intervene manually in the automatic landing approach at any time and control the drone 104 manually. The dust exposure is also lowest at the front of the agricultural machine 102. The platform 106 can also be expanded to include other functions, for example for agricultural purposes.

As soon as drone 104 reaches geofence 114 for any reason, it is pushed away from it in the direction of travel or sideways. If the height of one of the zones 116, 118, 120 changes, drone 104 also adjusts its flight altitude or rises to take account of the higher, wider zone and accepts the higher geofence 114.

The drone 104 is communicatively connected to the agricultural machine 102, exemplarily wirelessly but optionally also via a data cable. The positions and heights of the drone 104 are exchanged at all times by an interface with the agricultural machine 102. In addition, photos, videos, live streams, obstacles, position data, wind speed and direction or even dust intensity (e.g. recorded by a camera on the drone 104) can be exchanged via the interface.

The landing of the drone 104 can be triggered automatically by the drone 104, by the control unit 502 or by the operator. When the landing has been triggered and the drone 104 is in the defined final approach, the size of the geofence 114 is reduced or at least one of the zones 116, 118, 120 is deactivated so that the drone 104 can land on the landing platform 106. The size of the geofence 114 can be reduced by reducing the boundary of at least one of the zones 116 to 120 of the geofence 114 and/or by deactivating at least one of the zones 116 to 120.

Fig. 2 shows an example in which the lower zone 120 (shown in Fig. 1) of the geofence 114 is switched to inactive when landing has been triggered, thus allowing the landing.

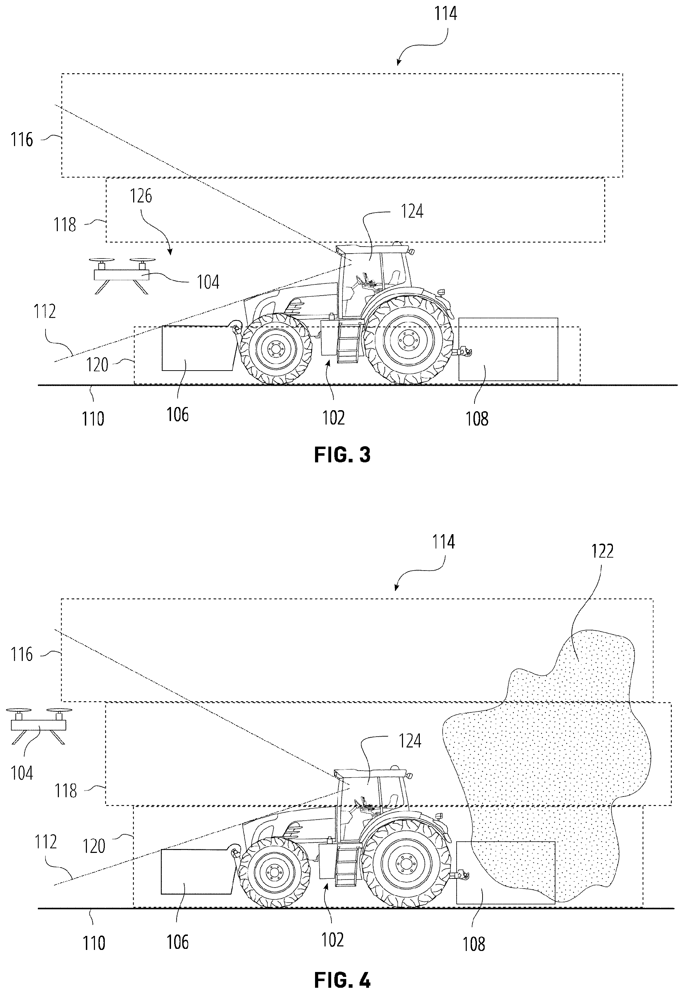

Fig. 3 shows an alternative example in which the size of the geofence 114 is reduced by reducing the height of the zones 118 and 120. This opens a tunnel 126 (e.g. in the form of a channel), which leads the drone 104 to the landing platform 106.

A landing procedure is for example triggered as soon as drone 104 is a within a threshold distance (e.g., a few meters) of the front of the agricultural machine 102. The control unit 502 may then reduce the speed of the mobile machine 102. This minimizes environmental pollution (e.g. dust) and ensures a safe landing. Once the drone 104 has landed on the platform 106, the control unit 502 may then accelerate the agricultural machine 102 back to its original speed.

A take-off procedure may also be triggered either automatically by the agricultural machine 102 or by the operator. As soon as the take-off procedure is initiated, the control unit 502 may again reduce the speed of the agricultural machine 102. The control unit 502 either activates the geofence 114 without the lower zone 120 (as explained with reference to Fig. 2) or a provides a tunnel 126 in the geofence 114 (as shown in Fig. 3). The drone 104 automatically takes off and rises in the direction of travel. As soon as a set minimum distance is reached, the lower zone 120 of the geofence 114 is reactivated by the control unit 502 or the tunnel 126 is closed again. Thus, the drone 104 is prohibited from approaching too closely to the agricultural machine 102 during normal drone flight.

The permissible distance between the drone 104 and the agricultural machine 102 can be set by the operator and stored in a memory 508 of the control unit 502. This may for example be used to ensure that the drone 104 is always within the operator's field of view 112 and range.

The drone 104 can transmit the recorded wind speeds and wind directions to the control unit 502 of the agricultural machine 102. This data can be used to directly avoid areas with a high probability of dust pollution.

Fig. 4 shows a large dust cloud 122 that can be stirred up when the agricultural machine 102 works the ground 110 with a towed attachment 108. When the drone 104 detects the dust cloud 122 (e.g. with a built-in camera), the geofence 114 may be adjusted to enclose the dust cloud 122 within zones 116 to 120, as shown in Fig. 4. Alternatively, an additional geofence zone can be created that encloses the dust cloud.This prevents the drone 104 from flying through the dense dust cloud 122 and becoming invisible to the user or damaging the drone's engines. Moreover, the dust cloud 122 may be detected by an onboard camera of the agricultural machine 102.

Dust clouds 122 are recognized by image recognition and evaluation. The geofence 114 remains active until the control unit 502 no longer detects any dust 122 in this area based on the sensor data received.

In addition to creating a geofence 114 for the drone 104, the recordings can also be used to create danger zones for the agricultural machine 102. As soon as the drone 104 or another sensor detects people, animals, objects, an uneven floor or even water holes, a warning may be issued to the operator, or to the agricultural machine 102 to initiate an automatic response, depending on the potential danger. Alternatively, or additionally, a geofence 114 can be created directly, as shown in Fig. 4. This helps to avoid dangerous situations. These zones can be deactivated by artificial intelligence or manually by the operator.

The geofence 114 can also be created on the basis of sensor data from the agricultural machine 102. This sensor data may provide some of the same information as the drone 104, but is attached directly to the agricultural machine 102. Weather data can also be integrated using environmental sensors, and/or weather data may be obtained from a weather service.

FIG. 5 shows a control unit 502 comprising an I/O interface 504, a controller 506 and a memory 508. The I/O interface 504, the controller 506 and the memory 508 may be attached to a printed circuit board (PCB). The control unit 502 may receive and send signals or data via the I/O interface 504. The I/O interface 504 may be a wireless interface or a connector. The controller 506 may store the data or signals received by the control unit 502 in the memory 508. The memory 508 may contain additional data or executable computer program products, for example in terms of a computer-implemented method, that may be retrieved, processed or executed by the controller 506. Data or signals resulting from the processing of data or signals or from the execution of a computer program product may be stored to the memory 508 or sent to the I/O interface 504 by the controller 506. Regardless of FIG. 5 exemplarily illustrating the control unit 502 as a standalone control unit, the control unit 502 may represent a network of multiple control units distributed within the system.

The control unit 502 is installed in the agricultural machine 102 and can communicate with the drone 104. In examples, the control unit 502 automatically controls the adjustment of the geofence 114, the flight of the drone 104 and optionally some control features of the agricultural machine 102. The geometry of the design field of view 112 from the cabin 124 of the agricultural machine 102 can be stored as a parameter in the memory 508 of the control unit 502. Thus, the zones 116, 118 and 120 can always be adapted to the field of view 112 by the control unit 502 so that the drone 104 is forced to move into the field of view 112 during the landing approach.

As will be clear from the description above, the concept of this disclosure is to provide a geofence 114 which is suitable during drone flight. This geofence 114 for example provides an exclusion zone around the agricultural machine 102 to prevent collision between the drone 104 and the agricultural machine 102. However, it may additionally be designed to ensure the drone 104 remains visible from the cabin 124.

The geofence 114 is adapted at least for landing, and optionally also for take-off. In this case, a permitted path is available to the drone landing platform 106. This permitted path may be only in the forward facing field of view 112 of the operator.

The change of the geofence 114 may be triggered automatically, for example by detecting the drone 104 is coming in automatically to land, or it may be triggered manually by the operator, indicating that a landing procedure (or a take-off procedure) is to be followed.

In addition to adapting the geofence 114 for landing and take-off, it may be adapted to provide prohibited zones for the drone 104 and/or for the agricultural machine 102, to avoid collisions with other objects, or to avoid a drone flight into regions where it will not be visible.

One aspect described above relates to the control of the landing and start path of the drone 104. Another aspect relates to the visibility of the drone 104 during flight. These two aspects may be employed as independent concepts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. An agricultural system, comprising:
an agricultural machine (102);
a drone landing platform (106) mounted to the agricultural machine (102);
a controller (506) configured to generate a dynamically controllable geofence (114) which defines prohibited drone positions, wherein the controller (506) is configured to adapt the shape of the geofence (114) for landing of a drone (104) to provide a permitted drone path during landing on the drone landing platform (106).

2. The agricultural system of claim 1, wherein the controller (506) is configured to define a first geofence shape during drone flight which includes a prohibited volume around the agricultural machine (102) and a second geofence shape during drone landing which excludes the drone landing platform (106) and said permitted drone path.

3. The agricultural system of claim 1 or 2, wherein the controller (506) is further configured to adapt the shape of the geofence (114) for take-off of the drone (104) to provide permitted drone positions during take-off from the drone landing platform (106).

4. The agricultural system of any one of claims 1 to 3, wherein the agricultural machine (102) comprises an operator cabin (124), and the drone landing platform (106) is positioned in front of the operator cabin (124).

5. The agricultural system of any one of claims 1 to 4, wherein the controller (506) is configured to generate the geofence (114) such that all non-prohibited drone positions are within a field of view (112) of an operator position of the agricultural machine (102).

6. The agricultural system of claim 5, further comprising a database storing data relating to the field of view (112) of a plurality of types of agricultural machine, wherein the controller (506) is configured to generate the dynamically controllable geofence (114) for a selected one of said plurality of types of agricultural machine.

7. The agricultural system of any one of claims 1 to 6, wherein the controller (506) is configured to adapt the position and/or shape of the geofence (114) in dependence on one or more of:
the position of the agricultural machine (102);
the speed of the agricultural machine (102);
the field of view (112) from an operator position of the agricultural machine (102);
environmental conditions.

8. The agricultural system of any one of claims 1 to 7, wherein the controller (506) is configured to generate one or both of:
drone flight control signals for controlling the drone (104);
agricultural machine control signals for controlling the agricultural machine (102).

9. The agricultural system of claim 8, wherein the controller (506) is configured to control a speed of the agricultural machine (102) during landing and/or take-off of the drone (104).

10. The agricultural system of any one of claims 1 to 9, comprising a satellite navigation system for detecting the position of the agricultural machine (102), wherein the controller (506) is configured to generate the geofence (114) using the detected position of the agricultural machine (102).

11. The agricultural system of any one of claims 1 to 10, further comprising the drone (104), wherein the drone (104) comprises one or more of:
a position sensor;
a camera; and
a wind speed and direction sensor.

12. A method of controlling a drone (104) of an agricultural system, wherein the drone (104) is for taking off from, and landing to, a drone landing platform (106) of an agricultural machine (102) of the agricultural system, the method comprising:
generating a dynamically controllable geofence (114) which defines prohibited drone positions, wherein the method comprises adapting the shape of the geofence (114) for landing of the drone (104) to provide a permitted drone path during landing on the drone landing platform (106).

13. The method of claim 12, comprising defining a first geofence shape during drone flight which includes a prohibited volume around the agricultural machine (102) and a second geofence shape during drone landing which excludes the drone landing platform (106) and said permitted drone path.

14. The method of 12 or 13, comprising generating the geofence such that all non-prohibited drone positions are within a field of view (112) of an operator position of the agricultural machine (102).

15. A computer program comprising computer program code which is adapted to perform the method of claim 12, 13 or 14 when said program is run on the controller (506) of the agricultural system of claim 1.
